(19) Europäisches Patentamt
European Patent Office
Office européen des brevets

(11) EP 0 798 556 B1

(12) EUROPEAN PATENT SPECIFICATION

(45) Date of publication and mention
of the grant of the patent:
**06.08.2003 Bulletin 2003/32**

(51) Int Cl.7: **G01N 27/407**, G01N 27/419

(21) Application number: **97302125.6**

(22) Date of filing: **26.03.1997**

(54) **Gas sensor**

Gassensor

Capteur de gaz

(84) Designated Contracting States:
**DE FR GB IT SE**

(30) Priority: **28.03.1996 JP 7471896**
**10.03.1997 JP 5523797**

(43) Date of publication of application:
**01.10.1997 Bulletin 1997/40**

(73) Proprietor: **NGK INSULATORS, LTD.**
**Nagoya City Aichi Pref. (JP)**

(72) Inventors:
• **Kato, Nobuhide**
**Ama-gun, Aichi Pref. 467 (JP)**
• **Nakagaki, Kunihiko**
**Nagoya-city, Aichi Pref. 461 (JP)**

(74) Representative: **Paget, Hugh Charles Edward et al**
**MEWBURN ELLIS**
**York House**
**23 Kingsway**
**London WC2B 6HP (GB)**

(56) References cited:
**EP-A- 0 310 063          EP-A- 0 310 206**
**EP-A- 0 345 824          WO-A-95/30146**
**US-A- 4 769 123          US-A- 4 810 529**
**US-A- 4 882 033          US-A- 4 902 400**
**US-A- 5 476 001**

## Description

BACKGROUND OF THE INVENTION

Field of the Invention:

The present invention relates to a gas sensor for measuring oxides such as NO, $NO_2$, $SO_2$, $CO_2$, and $H_2O$ contained in, for example, atmospheric air and exhaust gas discharged from vehicles or automobiles, and inflammable gases such as $H_2$, CO, and hydrocarbon (CnHm). In particular, the present invention relates to a gas sensor for measuring NO and $NO_2$.

Description of the Related Art:

Exhaust gas, which is discharged, for example, from vehicles or automobiles such as gasoline-fueled automobiles and diesel powered automobiles, contains nitrogen oxides (NOx) such as nitrogen monoxide (NO) and nitrogen dioxide ($NO_2$), as well as carbon monoxide (CO), carbon dioxide ($CO_2$), water ($H_2O$), hydrocarbon (CnHm), hydrogen ($H_2$), oxygen ($O_2$) and so on. In such exhaust gas, about 80 % of the entire NOx is occupied by NO, and about 95 % of the entire NOx is occupied by NO and $NO_2$.

The three way catalyst, which is used to clean CnHm, CO, and NOx contained in the exhaust gas, exhibits its maximum cleaning efficiency in the vicinity of the theoretical air fuel ratio (A/F = 14.6). If A/F is controlled to be not less than 16, the amount of produced NOx is decreased. However, the cleaning efficiency of the catalyst is lowered, and consequently the amount of discharged NOx is apt to increase.

Recently, in order to effectively utilize fossil fuel and avoid global warming, the market demand increases, for example, in that the discharge amount of $CO_2$ should be suppressed. In order to respond to such a demand, it becomes more necessary to improve the fuel efficiency. In response to such a demand, for example, the lean burn engine and the catalyst for cleaning NOx are being researched. Especially, the need for a NOx sensor increases.

A conventional NOx analyzer has been hitherto known as an instrument for detecting NOx. The conventional NOx analyzer is operated to measure a characteristic inherent in NOx, based on the use of chemical luminous analysis. However, the conventional NOx analyzer is inconvenient in that the instrument itself is extremely large and expensive. The conventional NOx analyzer requires frequent maintenance because optical parts are used to detect NOx. Further, when the conventional NOx analyzer is used, any sampling operation should be performed for measurement of NOx, and hence it is impossible to directly insert a detecting element itself into a fluid. Therefore, the conventional NOx analyzer is not suitable for analyzing transient phenomena such as those occur in the exhaust gas discharged from an automobile, in which the condition frequently varies.

In order to dissolve the inconveniences as described above, there has been already suggested a sensor for measuring a desired gas component in exhaust gas by using a substrate comprising an oxygen ion-conductive solid electrolyte.

FIG. 11 shows a system of a gas analyzer disclosed in International Publication WO 95/30146. This apparatus comprises a first chamber 4 into which a measurement gas G containing NO is introduced through a narrow hole 2, and a second chamber 8 into which the measurement gas G is introduced from the first chamber 4 through a narrow hole 6. Wall surfaces for constructing the first and second chambers 4, 8 are composed of partition walls 10a, 10b made of zirconia ($ZrO_2$) capable of transmitting oxygen ion. A pair of measuring electrodes 12a, 12b and a pair of measuring electrodes 14a, 14b for measuring the partial pressure of oxygen in the respective chambers are arranged on portions of one $ZrO_2$ partition wall 10a corresponding to the first and second chambers 4, 8 respectively. A set of pumping electrodes 16a, 16b and a set of pumping electrodes 18a, 18b for pumping out $O_2$ in the respective chambers to the outside of the chambers are arranged on the other $ZrO_2$ partition wall 10b.

The gas analyzer thus constructed functions as follows. Namely, the partial pressure of oxygen contained in the measurement gas G introduced into the first chamber 4 through the narrow hole 2 is detected by a voltmeter 20 as an electric potential difference generated between the measuring electrodes 12a, 12b. A voltage of 100 to 200 mV is applied between the pumping electrodes 16a, 16b by the aid of a power source 22 so that the electric potential difference is adjusted to have a predetermined value. Accordingly, $O_2$ in the first chamber 4 is pumped out to the outside of the apparatus. The amount of pumped out oxygen can be measured by using an ammeter 24.

The measurement gas G, from which almost all $O_2$ has been removed, is introduced into the second chamber 8 through the narrow hole 6. In the second chamber 8, an electric potential difference generated between the measuring electrodes 14a, 14b is detected by a voltmeter 26. Thus the partial pressure of oxygen in the second chamber 8 is measured. On the other hand, NO contained in the measurement gas G introduced into the second chamber 8 is decomposed as follows by the aid of a voltage applied between the pumping electrodes 18a, 18b by means of a power source 28:

$$NO \rightarrow (1/2)N_2 + (1/2)O_2$$

$O_2$ produced by the decomposition is pumped out to the outside of the second chamber 8 by the aid of the pumping electrodes 18a, 18b. A value of an electric current generated during this process is detected by an ammeter 30. Thus the concentration of NO contained in the measurement gas G is measured.

In the case of the gas analyzer constructed as described above, the partial pressure of oxygen in each of the chambers is adjusted by measuring each of the minute voltages between the measuring electrodes 12a, 12b, and the measuring electrodes 14a, 14b, and the concentration of NO contained in the measurement gas G is measured by measuring the minute current between the pumping electrodes 18a, 18b. Accordingly, in order to maintain the accuracy of measurement performed by the gas analyzer, it is necessary to sufficiently ensure insulation for lead wires connected to the respective measuring electrodes 12a, 12b, 14a, 14b and the pumping electrodes 18a, 18b so that variation in detected signal caused by disturbance may be avoided as less as possible.

In general, in order to ensure the insulation as described above, a pumping cell is insulated from a sensor cell by using a porous insulative material, or a lead wire for an electrode is insulated, as described, for example, in Japanese Patent Publication Nos. 4-26055 and 5-62297. For example, alumina or spinel is generally used as a material for ensuring the insulation.

However, when the porous insulative material is used for insulation for the lead wire of the gas analyzer constructed as described above, $O_2$ comes from, for example, a side of a connector for the lead wire, exposed to the outside, and it penetrates into the measuring chamber through a porous insulative layer. As a result, the oxygen concentration is increased in the vicinity of an electrode located near to the insulative layer. Especially, the measuring electrode 14b arranged in the second chamber 8 is apt to be affected by the penetrated $O_2$, and thus an inconvenience arises in that the $O_2$ increases the NO-decomposing current.

As for the first chamber 4, when the measuring electrode 12b for measuring the oxygen concentration in the first chamber 4 is arranged nearer to the second chamber 8 than the pumping electrode 16b, an inconvenience arises in that the oxygen concentration is increased in the vicinity of the measuring electrode 12b for detecting the oxygen concentration in the first chamber 4.

A further inconvenience occurs as follows. Namely, when the gas analyzer is not operated or turned off, $O_2$ is adsorbed by the porous insulative layer. When the gas analyzer is operated next time, the adsorbed $O_2$ leaks to the measuring space. Consequently, the oxygen concentration is increased in the vicinity of the measuring electrodes 12b, 14b.

## SUMMARY OF THE INVENTION

The present invention has been made in order to overcome the inconveniences described above, an object of which is to provide a gas sensor which makes it possible to avoid penetration of oxygen other than via a measurement gas-introducing port, and thus measure the amount of oxides or inflammable gases contained in a measurement gas with an extremely high degree of accuracy.

The present invention provides a gas sensor as set out in claim 1.

According to the present invention, at first, the oxygen in the measurement gas introduced into the first chamber from the external space is subjected to the pumping process performed by the main pumping means, and the oxygen is adjusted to have a predetermined concentration. The measurement gas, in which the oxygen concentration has been adjusted by the main pumping means, is introduced into the electric signal-generating conversion means provided for the second chamber. The electric signal-generating conversion means serves to decompose the predetermined gas component contained in the measurement gas introduced into the second chamber, by the aid of the catalytic action and/or electrolysis, and provide, by conversion, the electric signal corresponding to the amount of oxygen produced by the decomposition. After that, the predetermined gas component contained in the measurement gas is measured on the basis of the electric signal supplied from the electric signal-generating conversion means.

The gas sensor may comprise a measuring pumping means and a current-detecting means to serve as the electric signal-generating conversion means. In this preferred embodiment, the measurement gas, in which the oxygen concentration has been adjusted by the main pumping means, is introduced into the measuring pumping means provided for the second chamber.

In the measuring pumping means, the predetermined gas component contained in the measurement gas introduced into the second chamber is decomposed by the aid of the catalytic action and/or electrolysis. The oxygen produced by the decomposition is subjected to a pumping process performed by the measuring pumping means on the basis of a measuring voltage applied between inner and outer detecting electrodes. A pumping current is generated in the measuring pumping means, corresponding to an amount of oxygen subjected to the pumping process performed by the measuring pumping means. The generated pumping current is detected by the current-detecting means. Thus the predetermined gas component is measured, corresponding to the amount of oxygen.

In another preferred embodiment, the gas sensor of the present invention may comprise a concentration-detecting means and a voltage-detecting means to serve as the electric signal-generating conversion means. In this embodiment, the measurement gas, in which the concentration of oxygen has been adjusted by the main pumping means, is introduced into the concentration-detecting means provided for the second chamber. In the concentration-detecting means, the predetermined gas component contained in the measurement gas introduced into the second chamber is decomposed by the aid of the catalytic action. The concentration-detecting means generates an electromotive force of an oxygen concentration cell, corresponding to a difference between an amount of oxygen produced by the decomposition and an amount of oxygen contained in a gas existing on a side of an outer detecting electrode. The generated electromotive force is detected by the voltage-detecting means. Thus the predetermined gas component is measured, corresponding to the amount of oxygen.

In the gas sensor according to the present invention, the lead wire, which is connected to the inner detecting electrode arranged in the second chamber, is held by the insulative layer composed of the densified insulative material. Accordingly, the second chamber is prevented from penetration of unnecessary oxygen from the outside through the insulative layer. Therefore, the amount of the predetermined gas component can be measured highly accurately on the basis of only the oxygen produced from the predetermined gas component.

Oxides, for example, nitrogen oxides contained in the measurement gas can be measured highly accurately by using the gas sensor according to the present invention. In another embodiment, inflammable gases, for example, gas components such as hydrogen, carbon monoxide, and hydrocarbon can be also measured highly accurately by setting the atmosphere in the first chamber to have a predetermined amount of oxygen with which no inflammable gas burns.

It is desirable that the insulative material is composed of a material having a porosity of not more than 10 %.

By the arrangement of the insulative layer composed of the insulative material between a wall surface of the second chamber and a portion at which the lead wire is led out to the outside of the gas sensor, as set out in claim 1 the penetration of oxygen from the outside can be avoided more appropriately. Thus the predetermined gas component can be measured highly accurately by the aid of the measuring pumping means or the concentration-detecting means provided for the second chamber.

The inner detecting electrode in the second chamber may be arranged and separated by a predetermined distance from a wall surface at which the lead wire is led at least to the inner detecting electrode.

In the gas sensor constructed as described above, a second chamber may be constructed by covering the inner detecting electrode with a diffusion rate-determining section composed of a porous material. In this embodiment, the second chamber is formed at an interface between the diffusion rate-determining section and the inner detecting electrode.

The gas sensor constructed as described above may include a plurality of second chambers linked to the first chamber, and arranged in series or in parallel to the first chamber. In this embodiment, a plurality of oxides of different types can be measured by using one sensor by individually setting a pumping current applied between electrodes for each of the second chambers, corresponding to each of oxides as measurement objectives.

Especially, nitrogen oxides such as NO and $NO_2$ can be measured with a high degree of accuracy by using the gas sensor according to the present invention.

The gas sensor constructed as described above may further comprise an auxiliary pumping means including inner and outer auxiliary pumping electrodes arranged inside and outside the second chamber, for performing a pumping process for oxygen contained in the measurement gas after being subjected to the pumping process performed by the main pumping means, on the basis of an auxiliary pumping voltage applied between the inner and outer auxiliary pumping electrodes.

Accordingly, the oxygen concentration in the measurement gas introduced from the external space into the first chamber is firstly coarsely adjusted by the aid of the main pumping means, and then the measurement gas is introduced into the second chamber for the nest step. In the second chamber, the oxygen concentration is further adjusted finely by the aid of the auxiliary pumping means.

In general, when the concentration of oxygen in the measurement gas in the external space greatly changes (for example, from 0 to 20 %), the concentration distribution of oxygen in the measurement gas introduced into the main pumping means greatly changes. The amount of oxygen introduced into the measuring pumping means or the concentration-detecting means also changes.

In such a situation, the oxygen concentration in the measurement gas after being subjected to the pumping process performed by the main pumping means is finely adjusted upon the pumping process performed by the auxiliary pumping means. Significantly, the change in oxygen concentration in the measurement gas introduced into the auxiliary pumping means is greatly reduced as a result of the pumping process performed by the main pumping means, as compared with the change in oxygen concentration in the measurement gas supplied from the external space (the measurement gas introduced into the main pumping means). Accordingly, the concentration of the predetermined gas component can be accurately and constantly controlled in the vicinity of the inner detecting electrode of the measuring pumping means or in the vicinity of the outer detecting electrode of the concentration-detecting means.

Therefore, the concentration of the predetermined gas component introduced into the measuring pumping means or the concentration-detecting means is scarcely affected by the change in oxygen concentration in the measurement gas (the measurement gas introduced into the main pumping means). As a result, the pumping current value detected by the current-detecting means or the electromotive force detected by the voltage-detecting means is not affected by the change in concentration of oxygen in the measurement gas. Thus a value is obtained, which accurately corresponds to the amount of the objective component existing in the measurement gas.

The gas sensor constructed as described above may further comprise a concentration-measuring means including an inner measuring electrode exposed to the first chamber and an outer measuring electrode exposed to a reference gas-introducing space, for measuring an electromotive force of an oxygen concentration cell generated between the inner and outer measuring electrodes as a partial pressure of oxygen in the first chamber; and a main pumping control means for adjusting a level of the control voltage so that the electromotive force of the oxygen concentration cell detected by the concentration-measuring means has a predetermined value; wherein the insulative layer composed of the insulative material is arranged for a lead wire connected to the inner measuring electrode in the first chamber and/or the inner detecting electrode.

Accordingly, the electromotive force is generated in the concentration-measuring means, corresponding to a difference between the amount of oxygen contained in the atmosphere in the first chamber and the amount of oxygen contained in the gas existing on the side of the outer measuring electrode. The level of the control voltage applied between the inner and outer pumping electrodes of the main pumping means is adjusted on the basis of the electromotive force by the aid of the main pumping control means.

The main pumping means performs the pumping process for an amount of the oxygen in the measurement gas introduced from the external space, the amount corresponding to the level of the control voltage. The oxygen concentration in the measurement gas is subjected to feedback control so that the oxygen concentration is at a predetermined level by supplying, to the main pumping means, the control voltage having been subjected to the adjustment for the level as described above.

According to the present invention, the lead wire, which is connected to the inner detecting electrode arranged in the second chamber and/or the inner measuring electrode arranged in the first chamber, is in a form of being held by the insulative layer composed of the densified insulative material. Therefore, the first and second chambers are prevented from penetration of unnecessary oxygen from the outside through the insulative layer. Accordingly, the concentration-measuring means generates the electromotive force on the basis of only the oxygen contained in the measurement gas in the first chamber, and hence the oxygen concentration in the first chamber is highly accurately adjusted by the aid of the main pumping means. Further, the measuring pumping means or the concentration-detecting means can highly accurately measure the amount of the predetermined gas component on the basis of only the oxygen produced from the predetermined gas component.

Alternatively, the gas sensor according to the present invention may be used to highly accurately measure the amount of inflammable gases contained in the measurement gas, on the basis of a pumping current corresponding to an amount of oxygen pumped into the second chamber and bound to the inflammable gases.

Especially, the present invention makes it possible to highly accurately measure inflammable gases such as $H_2$, CO, and hydrocarbon.

It is preferable that each of the substrates for constructing each of the first and second chambers is heated to a predetermined temperature by using a heating means in order to give desired characteristics of oxygen ion conductivity. In this embodiment, it is preferable that the inner detecting electrode (and inner auxiliary pumping electrode) arranged in the second chamber may be arranged on the substrate located on a side of the heating means.

A means for giving a predetermined diffusion resistance to the measurement gas (referred to as "first diffusion rate-determining section" for convenience) may be arranged between the external space and the first chamber. Further, a means for giving a predetermined diffusion resistance to the measurement gas (referred to as "second diffusion rate-determining section" for convenience) may be arranged between the first and second chambers. In this embodiment, it is desirable that the diffusion resistance of the second diffusion rate-determining section is set to be larger than the diffusion resistance of the first diffusion rate-determining section.

It is preferable to use an Rh cermet as the decomposing catalyst arranged in the second chamber. The decomposing catalyst may be provided as the inner detecting electrode. Alternatively, the decomposing catalyst may be provided as a catalyst layer separately from the inner detecting electrode.

In the gas sensor according to the present invention, the outer detecting electrode is arranged at a position exposed to a space into which the reference gas is introduced. Thus the oxygen produced by the decomposition of the predetermined gas component can be compared with the oxygen contained in the reference gas, making it possible to detect the predetermined gas component more accurately.

Especially, it is preferable that the outer detecting electrode is combined into a common unit with the outer auxiliary pumping electrode and the outer measuring electrode. In this embodiment, a common electrode, which serves as the outer detecting electrode of the measuring pumping means or the concentration-detecting means, the outer auxiliary pumping electrode of the auxiliary pumping means, and the outer measuring electrode of the concentration-measuring means, is exposed to the reference gas-introducing space. The common electrode can be defined as a reference electrode for the respective detecting processes performed by the measuring pumping means, the concentration-detecting means, and the concentration-measuring means. In accordance with this definition, the inner detecting electrode of the measuring pumping means and the concentration-detecting means can be defined as a detecting electrode, the inner auxiliary pumping electrode of the auxiliary pumping means can be defined as an auxiliary electrode, and the inner measuring electrode of the concentration-measuring means can be defined as a measuring electrode.

According to the present invention, the amount of inflammable gases contained in the measurement gas can be measured highly accurately on the basis of a pumping current corresponding to an amount of oxygen pumped into the second chamber to be bound by the inflammable gases. In this embodiment, the control voltage set for the main pumping means is established so that the electromotive force of the oxygen concentration cell is, for example, 930 mV. Thus it is possible to supply the measurement gas in which no inflammable gas burns, to the second chamber.

The above and other objects, features and advantages of the present invention will become more apparent from the following description when taken in conjunction with the accompanying drawings in which a preferred embodiment of the present invention is shown by way of illustrative example.

## DESCRIPTION OF THE DRAWINGS

FIG. 1 shows a plan view illustrating a gas sensor according to a first embodiment.

FIG. 2 shows a cross-sectional view taken along a line A-A in FIG. 1.

FIG. 3 shows a cross-sectional view taken along a line B-B in FIG. 2.

FIG. 4 shows experimental results obtained in a first illustrative experiment, representing characteristic curves concerning the relationship between the concentration of NO contained in a measurement gas and the pumping current Ip2 flowing through a measuring pumping cell.

FIG. 5 illustrates the relationship between the porosity of an insulative material and the easiness for oxygen to penetrate into the material.

FIG. 6 shows another illustrative embodiment (first modified embodiment) of the insulative layer.

FIG. 7 shows still another illustrative embodiment (second modified embodiment) of the insulative layer.

FIG.8 shows still another illustrative embodiment (third modified embodiment) of the insulative layer.

FIG. 9 shows a cross-sectional view illustrating another illustrative embodiment of the second chamber.

FIG. 10 shows experimental results obtained in a second illustrative experiment, representing characteristic curves concerning the relationship between the concentration of $C_3H_8$ as an inflammable gas contained in a measurement gas and the pumping current Ip2 flowing through a measuring pumping cell.

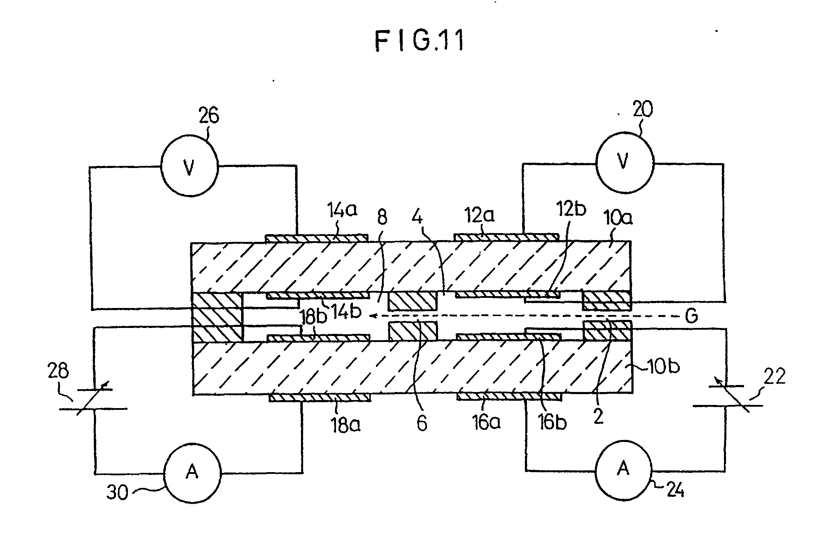

FIG. 11 shows a cross-sectional view illustrating a system of a gas analyzer concerning the conventional technique.

## DESCRIPTION OF THE PREFERRED EMBODIMENTS

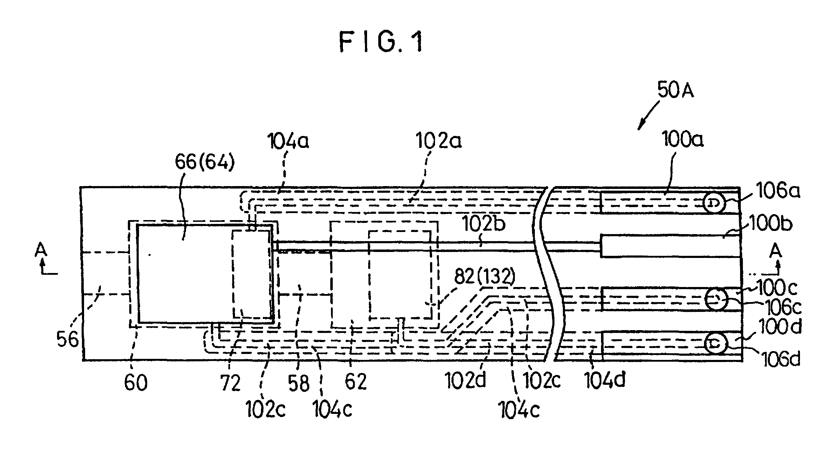

Several illustrative embodiments, in which the gas sensor according to the present invention is applied to gas sensors for measuring oxides such as NO, $NO_2$, $SO_2$, $CO_2$, and $H_2O$, and inflammable gases such as CO and CnHm contained in, for example, atmospheric air and exhaust gas discharged from vehicles or automobiles, will be explained below with reference to FIGS. 1 to 10.

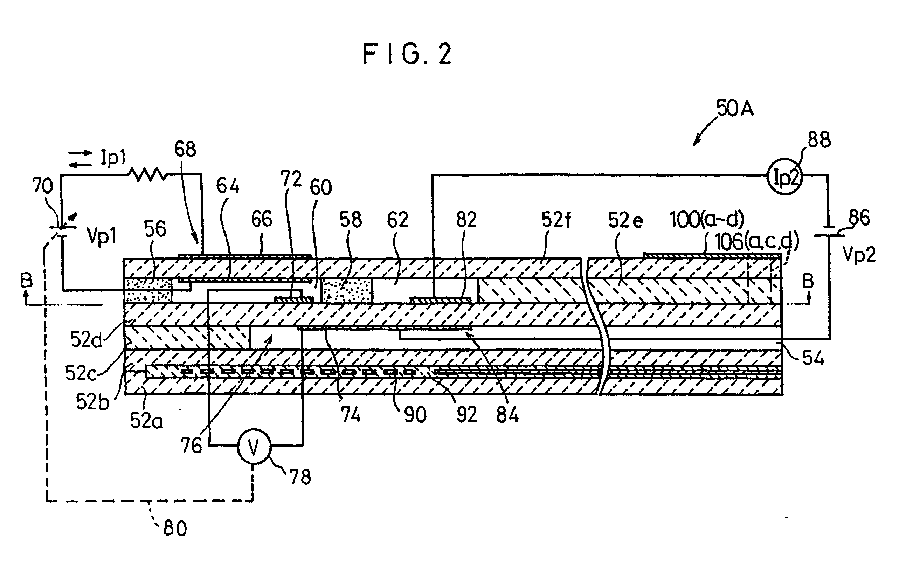

At first, as shown in FIGs. 1 and 2, a gas sensor 50A according to a first embodiment has a lengthy plate-shaped configuration as a whole, comprising, for example, six stacked solid electrolyte layers 52a to 52f composed of ceramics based on the use of oxygen ion-conductive solid electrolytes such as $ZrO_2$. First and second layers from the bottom are designated as first and second substrate layers 52a, 52b respectively. Third and fifth layers from the bottom are designated as first and second spacer layers 52c, 52e respectively. Fourth and sixth layers from the bottom are designated as first and second solid electrolyte layers 52d, 52f respectively.

Specifically, the first spacer layer 52c is stacked on the second substrate layer 52b. The first solid electrolyte layer 52d, the second spacer layer 52e, and the second solid electrolyte layer 52f are successively stacked on the first spacer layer 52c.

A space (reference gas-introducing space 54), into which a reference gas such as atmospheric air to be used as a reference for measuring oxides is introduced, is formed between the second substrate layer 52b and the first solid electrolyte layer 52d, the space being comparted by a lower surface of the first solid electrolyte layer 52d, an upper surface of the second substrate layer 52b, and a side surface of the first spacer layer 52c.

The second spacer layer 52e is interposed between the first and second solid electrolyte layers 52d, 52f. First and second diffusion rate-determining sections 56, 58 are also interposed between the first and second solid electrolyte layers 52d, 52f.

A first chamber 60 for adjusting the partial pressure of oxygen in a measurement gas is formed and comparted by a lower surface of the second solid electrolyte layer 52f, side surfaces of the first and second diffusion rate-determining sections 56, 58, and an upper surface of the first solid electrolyte layer 52d. A second chamber 62 for finely adjusting the partial pressure of oxygen in the measurement gas and measuring oxides, for example, nitrogen oxides (NOx) in the measurement gas is formed and comparted by a lower surface of the second solid electrolyte layer 52f, a side surface of the second diffusion rate-determining section 58, a side surface of the second spacer layer 52e, and an upper surface of the first solid electrolyte layer 52d.

The external space communicates with the first chamber 60 through the first diffusion-rate determining section 56, and the first chamber 60 communicates with the second chamber 62 through the second diffusion rate-determining section 58.

The first and second diffusion-rate determining sections 56, 58 give predetermined diffusion resistances to the measurement gas to be introduced into the first and second chambers 60, 62 respectively. Each of the first and second diffusion-rate determining sections 56, 58 can be formed as a passage composed of, for example, a porous material, or a small hole having a predetermined cross-sectional area so that the measurement gas may be introduced.

Especially, the second diffusion-rate determining section 58 is arranged and filled with a porous material comprising, for example, $ZrO_2$. The diffusion resistance of the second diffusion-rate determining section 58 is made larger than the diffusion resistance of the first diffusion-rate determining section 56.

The gas sensor 50A according to the first embodiment includes an inner pumping electrode 64 composed of a porous cermet electrode formed on an inner wall surface of the first chamber 60. An outer pumping electrode 66 is formed on a portion corresponding to the inner pumping electrode 64a, of the upper surface of the second solid electrolyte layer 52f. An electrochemical pumping cell, i.e., a main pumping cell 68 is constructed by the inner pumping electrode 64, the outer pumping electrode 66, and the second solid electrolyte layer 52f interposed between the both electrodes 64, 66.

A desired control voltage (pumping voltage) Vpl is applied between the inner pumping electrode 64 and the outer pumping electrode 66 of the main pumping cell 68 by the aid of an external variable power source 70 to allow a pumping current Ipl to flow in a positive or negative direction between the outer pumping electrode 66 and the inner pumping electrode 64. Thus the oxygen in the atmosphere in the first chamber 60 can be pumped out to the external space, or the oxygen in the external space can be pumped into the first chamber 60.

A measuring electrode 72, which is composed of a porous cermet electrode having a flat and substantially rectangular shape, is formed on a portion adjacent to the second diffusion rate-determining section 58, of the upper surface of the first solid electrolyte layer 52d for forming the first chamber 60. A reference electrode 74 is formed on a portion exposed to the reference gas-introducing space 54, of the lower surface of the first solid electrolyte layer 52d. An electrochemical sensor cell, i.e., a controlling oxygen partial pressure-detecting cell 76 is constructed by the measuring electrode 72, the reference electrode 74, and the first solid electrolyte layer 52d.

An electromotive force is generated between the measuring electrode 72 and the reference electrode 74 of the controlling oxygen partial pressure-detecting cell 76 on the basis of a difference in oxygen concentration between the atmosphere in the first chamber 60 and the reference gas (atmospheric air) in the reference gas-introducing space 54. The partial pressure of oxygen in the atmosphere in the first chamber 60 can be detected by measuring the generated electromotive force by the aid of a voltmeter 78.

Namely, the voltage V1, which is generated between the reference electrode 74 and the measuring electrode 72, is an electromotive force of the oxygen concentration cell, generated on the basis of a difference between a partial pressure of oxygen in the reference gas introduced into the reference gas-introducing space 54 and a partial pressure of oxygen in the measurement gas in the first chamber 60. The voltage V1 has the following relationship known as the Nernst's equation.

$$V1 = RT/4F \cdot \ln(Pl(O_2)/PO(O_2))$$

R: gas constant;
T: absolute temperature;
F: Faraday constant;
P1($O_2$)): partial pressure of oxygen in the first chamber 60;
PO($O_2$)): partial pressure of oxygen in the reference gas.

Therefore, the partial pressure of oxygen in the first chamber 60 can be detected by measuring the voltage V1 generated on the basis of the Nernst's equation, by the aid of the voltmeter 78.

The detected value of the partial pressure of oxygen is used to control the pumping voltage of the variable power source 70 by the aid of a feedback control system 80. Specifically, the pumping operation performed by the main pumping cell 68 is controlled so that the partial pressure of oxygen in the first chamber 60 has a predetermined value which is sufficiently low to control the partial pressure of oxygen in the second chamber 62 in the next step.

The inner pumping electrode 64 and the outer pumping electrode 66 are composed of an inactive material having a low catalytic activity on NOx, for example, NO in the measurement gas introduced into the first chamber 60. Specifically, the inner pumping electrode 64 and the outer pumping electrode 66 can be composed of a porous cermet electrode. In this embodiment, they are formed of a metal such as Pt and a ceramic such as $ZrO_2$. Especially, it is necessary, for the inner pumping electrode 64 and the measuring electrode 72 arranged in the first chamber 60 contacting with the measurement gas, to use a material having a weak reducing ability or no reducing ability with respect to the NO component in the measurement gas. It is preferable that the inner pumping electrode 64 and the measuring electrode 72 are composed of, for example, a compound having the perovskite structure such as $La_3CuO_4$, a cermet comprising a ceramic and a metal having a low catalytic activity such as Au, or a cermet comprising a ceramic, a metal of the Pt group, and a metal having a low catalytic activity such as Au. Further, when an alloy comprising Au and a metal of the Pt group is used as an electrode material, it is preferable to add Au in an amount of 0.03 to 35 vol% of the entire metal components.

The gas sensor 50A according to the first embodiment includes a detecting electrode 82 composed of a porous cermet electrode having a flat and substantially rectangular shape. The detecting electrode 82 is formed on a portion separated from the second diffusion rate-determining section 58, of the upper surface of the first solid electrolyte layer 52d for forming the second chamber 62. An electrochemical pumping cell, i.e., a measuring pumping cell 84 is constructed by the detecting electrode 82, the reference electrode 74, and the first solid electrolyte layer 52d.

The detecting electrode 82 can be constructed by appropriately selecting a nitrogen oxide-decomposing catalyst, for example, an Rh cermet, a material having a low catalytic activity, or a combination of a nitrogen oxide-decomposing catalyst arranged in the vicinity of a material having a low catalytic activity. In this embodiment, the detecting electrode 82 is composed of a porous cermet comprising Rh as a metal capable of reducing NOx as the objective gas component, and zirconia as a ceramic.

Accordingly, NOx existing in the measurement gas introduced into the second chamber 62 is decomposed by the catalytic action exerted by the detecting electrode 82. A constant voltage Vp2 at a level, at which $O_2$ produced from NOx decomposed by the detecting electrode 82 can be sufficiently pumped out toward the reference gas-introducing space 54, is applied between the detecting electrode 82 and the reference electrode 74 by the aid of a DC power source 86. The DC power source 86 can apply a voltage having a magnitude sufficient to give a limiting current to the pumping for oxygen produced during the decomposition in the measuring pumping cell 84.

Thus a pumping current Ip2 is allowed to flow through the measuring pumping cell 84, corresponding to an amount of oxygen pumped out by the pumping operation performed by the measuring pumping cell 84. The pumping current Ip2 is detected by an ammeter 88.

A pumping voltage sufficient to decompose NOx may be applied between the detecting electrode 82 and the reference electrode 74. Alternatively, an oxide-decomposing catalyst for decomposing NOx may be arranged in the second chamber 62. Thus $O_2$ produced by the action of the pumping voltage and/or the oxide-decomposing catalyst may be pumped out from the second chamber 62 at a predetermined pumping voltage.

As shown in FIG. 2, the gas sensor 50A according to the first embodiment includes a heater 90 for generating heat in accordance with electric power supply from the outside. The heater 90 is embedded in a form of being vertically interposed between the first and second substrate layers 52a, 52b. The heater 90 is provided in order to increase the conductivity of oxygen ion. A ceramic layer 92 composed of alumina or the like is formed to cover upper and lower surfaces of the heater 90 so that the heater 90 is electrically insulated from the first and second substrate layers 52a, 52b.

The heater 90 is arranged to extend over an entire region ranging from the first chamber 60 to the second chamber 62. Thus the first and second chambers 60, 62 are heated to predetermined temperatures respectively. Further, the main pumping cell 68, the controlling oxygen partial pressure-detecting cell 76, and the measuring pumping cell 84 are also heated to and maintained at predetermined temperatures respectively.

As shown in FIG. 1, the gas sensor 50A according to the first embodiment includes connector electrodes 100a to 100d arranged on an end portion of the surface located on a side opposite to the first diffusion rate-determining section 56. The measuring electrode 72, the outer pumping electrode 66, the inner pumping electrode 64, and the detecting electrode 82 are connected to the connector electrodes 100a to 100d through lead wires 102a to 102d.

The lead wire 102b for connecting the outer pumping electrode 66 to the connector electrode 100b is arranged over the second solid electrolyte layer 52f. The lead wire 102a and the connector electrode 100a, the lead wire 102c and the connector electrode 100c, and the lead wire 102d and the connector electrode 100d are electrically connected to one another via through-holes 106a, 106c, 106d respectively.

Insulative layers for the respective lead wires 102a to 102d are formed on the same substrate surfaces as those used for the measuring electrode 72, the outer pumping electrode 66, the inner pumping electrode 64, and the detecting electrode 82 respectively. Each of the insulative layers is formed to vertically interpose and embed each of the lead wires 102a to 102d therein.

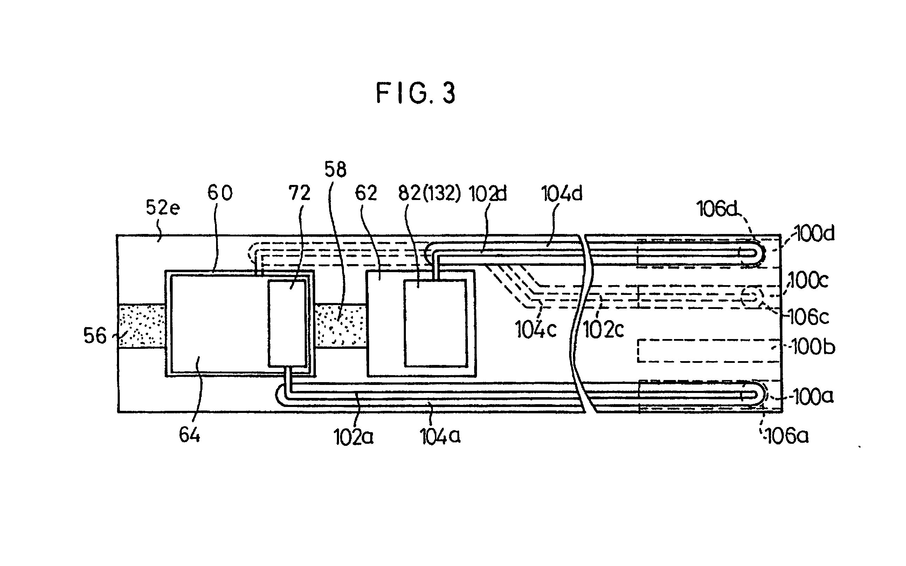

As shown in FIGs. 1 and 3, the densified insulative layer 104a for interposing and embedding the lead wire 102a for the measuring electrode 72 is separated by a predetermined distance from a wall surface for constructing the first chamber 60, on a side of the measuring electrode 72. The densified insulative layer 104d for interposing and embedding the lead wire 102d for the detecting electrode 82 is separated by a predetermined distance from a wall surface for constructing the second chamber 62, on a side of the detecting electrode 82. As shown in FIG. 1, the densified insulative layer 104c for interposing and embedding the lead wire 102c for the inner pumping electrode 64 in the first chamber 60 is separated by a predetermined distance from a wall surface for constructing the first chamber 60, on a side of the inner pumping electrode 64.

A material having a small porosity, preferably a material having a porosity of not more than 10 % may be selected from insulative materials such as alumina and spinel, which may be used for the densified insulative layers 104a, 104c, 104d.

The gas sensor 50A according to the first embodiment is basically constructed as described above. Next, its function and effect will be explained.

Before the measurement of oxides, the gas sensor 50A is set in a state in which the measurement gas can be introduced into the first chamber 60. Next, an electric power is applied to the heater 90 so that the first and second solid electrolyte layers 52d, 52f are activated to have desired states.

Next, the measurement of oxides contained in the measurement gas is started by introducing the measurement gas into the gas sensor 50A having been set as described above.

The measurement gas is introduced into the first chamber 60 under a predetermined diffusion resistance through the first diffusion rate-determining section 56. The partial pressure of oxygen contained in the measurement gas is controlled to have a predetermined value in accordance with a predetermined pumping voltage Vp1 applied between the inner pumping electrode 64 and the outer pumping electrode 66 by the aid of the variable power source 70. Namely, the partial pressure of oxygen in the first chamber 60 can be measured on the basis of a voltage V1 between the reference electrode 74 and the measuring electrode 72, detected by the voltmeter 78. The voltage V1 is an electromotive force of the oxygen concentration cell defined by the Nernst's equation described above. The voltage applied by the variable power source 70 is controlled so that the voltage V1 is, for example, not more than 350 mV. Thus the partial pressure of oxygen in the first chamber 60 is controlled to have a predetermined value.

The measurement gas, which has been controlled to have the predetermined partial pressure of oxygen in the first chamber 60, is introduced into the second chamber 62 through the second diffusion rate-determining section 58 designed to have a diffusion resistance larger than that of the first diffusion rate-determining section 56.

In the second chamber 62, a predetermined pumping voltage Vp2 sufficient to pump put $O_2$ in the second chamber 62 is applied between the reference electrode 74 and the detecting electrode 82 by the aid of the DC power source 86. The oxides contained in the measurement gas are decomposed by the aid of the pumping voltage Vp2 or an oxide-decomposing catalyst arranged in the second chamber 62. $O_2$ thus produced is pumped out toward the reference gas-introducing space 54 through the first solid electrolyte layer 52d. In this process, a current value Ip2, which is generated by movement of oxygen ion, is measured by the ammeter 88. The concentration of predetermined oxides, for example, NOx such as NO and $NO_2$ contained in the measurement gas is determined from the current value Ip2.

As described above, in the gas sensor 50A according to the first embodiment, the respective lead wires 102a, 102c, 102d, which are connected to the measuring electrode 72 for measuring the partial pressure of oxygen in the first chamber 60, the inner pumping electrode 64, and the detecting electrode 82 for measuring the amount of oxides in the second chamber 62, are interposed and embedded in the densified insulative layers 104a, 104c, 104d respectively. Thus the insulated state is appropriately maintained, and penetration of oxygen from the outside is well avoided. Therefore, it is possible to measure the amount of oxides with a high degree of accuracy.

Now, an illustrative experiment (referred to as "first illustrative experiment" for convenience) will be described. The first illustrative experiment was performed by providing Example 1 and Comparative Example. Example 1 was based on the use of a system constructed in the same manner as the gas sensor 50A according to the first embodiment. Comparative Example was based on the use of a system constructed by using conventional insulative layers composed of a porous material.

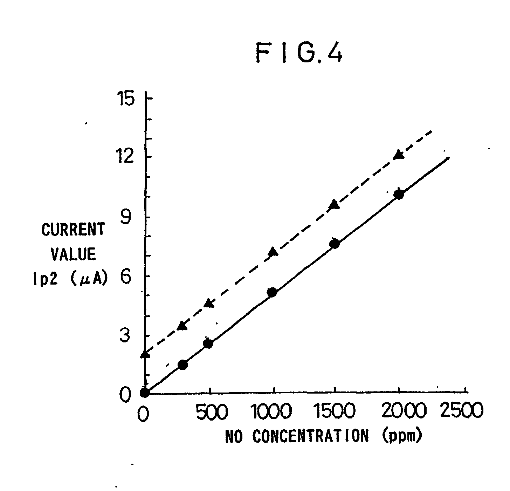

In the first illustrative experiment, observation was made for the relationship between the concentration of NO contained in the measurement gas and the current value Ip2 measured by the ammeter 88 connected between the detecting electrode 82 and the reference electrode 74 of the measuring pumping cell 84, concerning Example 1 and Comparative Example described above. Experimental results obtained in the first illustrative experiment are shown in FIG. 4.

In FIG. 4, a characteristic curve indicated by a solid line (illustrated by solid circles "●") represents an experimental result obtained in Example 1, and a characteristic curve indicated by a broken line (illustrated by solid triangles "▲") represents an experimental result obtained in Comparative Example. According to the experimental results shown in FIG. 4, the offset, which is obtained when the concentration of NO is zero, is approximately zero, in the result of measurement performed in Example 1, as compared with Comparative Example.

Namely, the densified insulative layers 104a, 104c are composed of the dense material having the small porosity. Accordingly, the first chamber 60 is prevented from penetration of external oxygen through portions of the measuring electrodes 72 and the inner pumping electrode 64. Thus it is possible to highly accurately control the oxygen concentration in the first chamber 60 to be a predetermined concentration.

When the measurement gas, in which the oxygen concentration has been highly accurately adjusted, is introduced into the second chamber 62, the second chamber 62 is also prevented from penetration of external oxygen through portions of the detecting electrode 82 by the aid of the densified insulative layer 104d, in the same manner as described above. Therefore, the concentration of oxides can be highly accurately measured in accordance with $O_2$ produced from only the oxides contained in the measurement gas.

Further, the densified insulative layers 104a, 104c, 104d extend up to the portions separated by the predetermined distances from the wall surfaces of the first and second chambers 60, 62 respectively. The first solid electrolyte layer 52d or the second spacer layer 52e having an extremely small porosity intervenes between the wall surface and the end of each of the densified insulative layers 104a, 104c, 104d on the side of the inner pumping electrode 64 or the detecting electrode 82. Therefore, even if external $O_2$ penetrates through the densified insulative layers 104a, 104c, 104d, the first and second chambers 60, 62 are appropriately prevented from penetration of $O_2$. As a result, the amount of oxides can be measured with an extremely high degree of accuracy.

Preferably, the insulative material for constructing the densified insulative layers 104a, 104c, 104d has a porosity of not more than 10 %. The porosity can be determined, for example, from an SEM image (cross-sectional image obtained by using an electron microscope) of a mirror-polished surface. Namely, when the easiness for $O_2$ to penetrate into a material or substance is represented by 1/R, the following relationship is given:

$$1/R = \rho \cdot S/L$$

$\rho$: porosity (-);
S: cross-sectional area of insulative layer ($mm^2$);
L: length of insulative layer (mm).

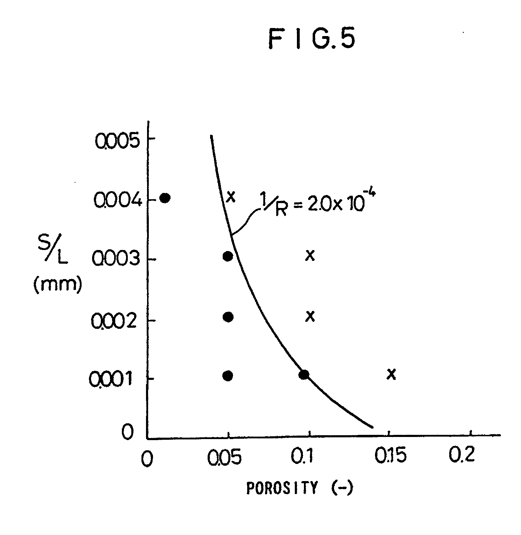

As shown in FIG. 5, a favorable relationship has been found to be obtained, in which the difference between the partial pressure of oxygen in the first chamber 60 and the partial pressure of oxygen in the second chamber 62 is within $\pm 30$ % in a range of $1/R \leq 2.0 \times 10^{-4}$.

Thus it has been found that the porosity $\rho$ is appropriately selected and preferably made to be not more than 10 %, considering, for example, the factor of S/L, the percentage of contraction during firing for the substrates and the insulative layers, and the shape of the gas sensor 50A.

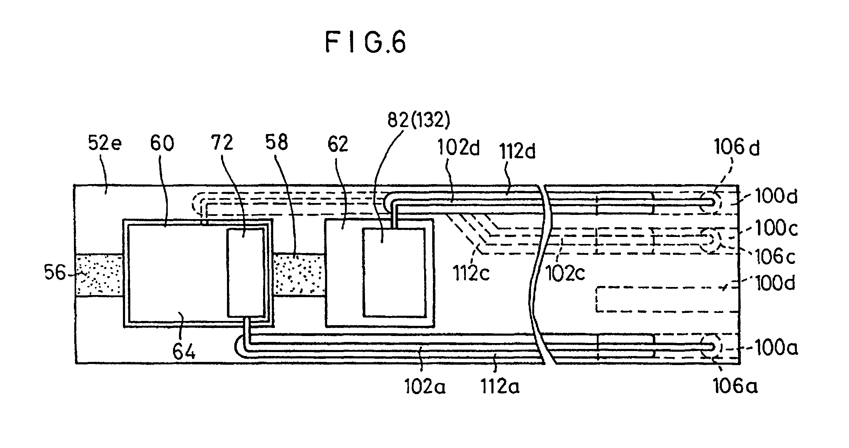

Next, several modified embodiments of the densified insulative layers 112a, 112c, 112d will be explained with reference to FIGs. 6 to 8.

At first, as shown in FIG. 6, a first modified embodiment illustrates the formation of densified insulative layers 112a, 112c, 112d which are terminated at positions separated by predetermined distances from both ends of the lead wires 102a, 102c, 102d respectively. In this embodiment, penetration of external oxygen through the respective both ends of the lead wires 102a, 102c, 102d can be more appropriately avoided.

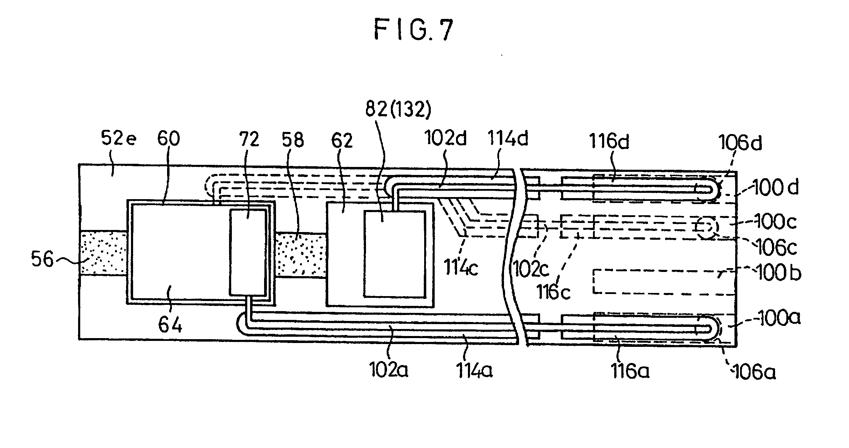

As shown in FIG. 7, a second modified embodiment illustrates the formation of densified insulative layers which are segmented at intermediate positions into densified insulative layers (114a, 116a), (114c, 116c), (114d, 116d). Also in this embodiment, penetration of oxygen from the outside can be more appropriately avoided, and the oxides can be measured highly accurately by the aid of the measuring pumping cell 84 provided for the second chamber 62.

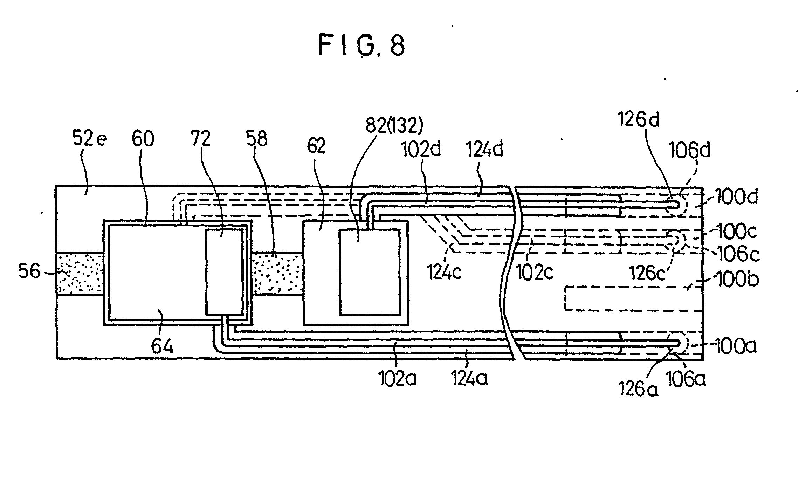

As shown in FIG. 8, a third modified embodiment illustrates the formation of densified insulative layers 124a, 124c, 124d at positions corresponding to portions having high temperatures of the oxygen ion-conductive solid electrolyte due to heat generated by the heater 90, of the lead wires 102 arranged between the first solid electrolyte layer 52d and the second spacer layer 52e.

Specifically, the third modified embodiment includes each of the densified insulative layers 124a, 124c, 124d which is exposed to the first or second chamber 60 or 62 at one end, and terminated at a position separated by a predetermined distance from each of the corresponding through-holes 106a, 106c, 106d at the other end.

In this embodiment, portions of the respective lead wires 102a, 102c, 102d (on which the densified insulative layers 124a, 124c, 124d are not formed), corresponding to the predetermined distance from the through-holes 106a, 106c, 106d, are interposed and embedded in the same solid electrolyte as that of the substrate. Thus it is possible to more appropriately avoid penetration of $O_2$ from the outside.

As a result, oxides can be measured highly accurately by the aid of the measuring pumping cell 84 provided for the second chamber 62.

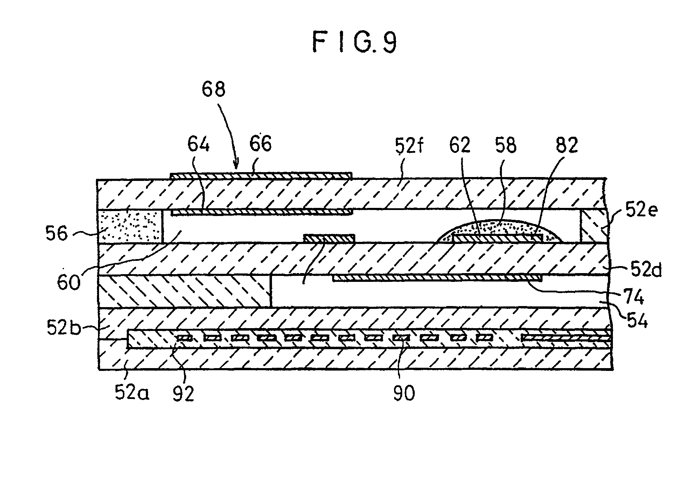

In the gas sensor 50A according to the first embodiment described above (including the various modified embodiments), the second chamber 62 has been constructed by comparting it with the wall surfaces of the first and second solid electrolyte layers 52d, 52f, and the second spacer layer 52e. Alternatively, as shown in FIG. 9, for example, a second chamber 62 can be constructed by covering the detecting electrode 82 itself with a second diffusion rate-determining section 58. In this embodiment, the second chamber 62 is constructed by an interface between the detecting electrode 82 and the second diffusion rate-determining section 58.

The gas sensor 50A according to the first embodiment can be also applied to sensors for highly accurately measuring the amount of inflammable gases,

for example, $H_2$, CO, and hydrocarbon contained in the measurement gas. In this embodiment, the gas sensor 50A according to the first embodiment is operated as follows. Namely, the pumping voltage Vp1 applied between the inner and outer pumping electrodes 64, 66 for the first chamber 60 is controlled by the aid of the feedback control system 80 so that the electromotive force V1 of the oxygen concentration cell measured by the ammeter 78 is, for example, 930 mV. Accordingly, the oxygen concentration in the first chamber 60 is adjusted to be a concentration at which no inflammable gas burns.

The measurement gas, in which the oxygen concentration has been adjusted to be the predetermined concentration by the main pumping cell 68, is introduced into the second chamber 62 through the second diffusion rate-determining section 58. In the second chamber 62, the voltage of the DC power source 86 is controlled so that the partial pressure of oxygen has a value corresponding to, for example, 450 mV as converted into and represented by a value of the electromotive force of the oxygen concentration cell. The oxide-decomposing catalyst is not arranged in the second chamber 62.

In this state, the inflammable gas in the measurement gas introduced into the second chamber 62 is bound to $O_2$ pumped into the second chamber 62 from the outside in accordance with the pumping voltage Vp2 applied to the detecting electrode 82. In this process, the amount of the inflammable gas can be measured by detecting the pumping current Ip2 flowing through the ammeter 88.

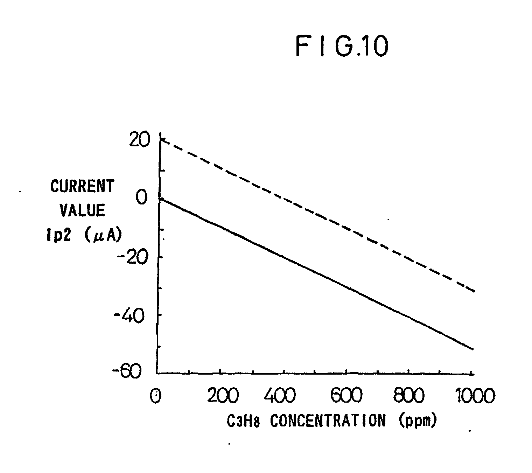

Now, an illustrative experiment (referred to as "second illustrative experiment" for convenience) will be described. The second illustrative experiment was performed by providing Example 1 and Comparative Example described above, in which observation was made for the relationship between the concentration of $C_3H_8$ as an inflammable gas contained in a measurement gas, and the pumping current value Ip2 flowing between the detecting electrode 82 and the reference electrode 74 of the measuring pumping cell 84. Experimental results obtained in the second illustrative experiment are shown in FIG. 10.

In FIG. 10, a characteristic curve indicated by a solid line represents an experimental result obtained in Example 1, and a characteristic curve indicated by a broken line represents an experimental result obtained in Comparative Example. According to the experimental results shown in FIG. 10, the offset, which is obtained when the concentration of $C_3H_8$ is zero, is approximately zero in Example 1, as compared with Comparative Example, because penetration of unnecessary $O_2$ from the outside is appropriately avoided in Example 1. Therefore, the concentration of $C_3H_8$ can be measured with an extremely high degree of accuracy, starting from any arbitrary concentration.

**Claims**

1. A gas sensor comprising:

a main pumping means (68) including inner and outer pumping electrodes (64, 66) arranged inside and outside a first chamber (60) defined by wall surfaces including a surface of a substrate composed of an oxygen ion-conductive solid electrolyte on which said pumping electrode are arranged, for performing a pumping process for oxygen contained in a measurement gas introduced into said first chamber (60) from an external space, on the basis of a control voltage (Vp1) applied between said inner and outer pumping electrodes (64, 66); and
an electric signal-generating conversion means including inner and outer detecting electrodes (82 or 132, 74) arranged inside and outside a second chamber (62) defined by wall surfaces including a surface of a substrate composed of an oxygen ion-conductive solid electrolyte on which said detecting electrodes are arranged, for decomposing a predetermined gas component contained in said measurement gas after being subjected to said pumping process performed by said main pumping means (68), by the aid of a catalytic action and/or electrolysis to provide, by conversion, an electric signal (Ip2 or V2) corresponding to an amount of oxygen produced by said decomposition;
said gas sensor being produced by forming insulative layers and conductive layers on a plurality of green sheets of solid electrolyte, and stacking and combining said plurality of green sheets into a unit by firing,

wherein:

at least one said conductive layer which constitutes a lead wire (102d) connected to said detecting electrode (82, 132) in said second chamber (62), is insulated by a densified insulative material which constitutes one said insulative layer (104d; 112d; 114d, 116d), so that an oxygen concentration controlled by said main pumping means (68) in said first chamber (60) is maintained within a predetermined range in said second chamber (62); and
said predetermined gas component contained in said measurement gas is measured on the basis of said electric signal (Ip2 or V2) supplied from said electric signal-generating conversion means;

wherein said insulative layer insulating said lead wire (102d) leaves uninsulated a portion of the length of said lead wire (102d) in said fired unit, selected from

(i) a portion of the length thereof extending from said insulative layer (104d) to a wall surface of said second chamber,
(ii) a portion of the length thereof extending from said insulative layer (112d) to a location at which said lead wire (102d) is led to the exterior of the gas sensor, and
(iii) at least one portion thereof in said fired unit at a gap between spaced portions (114d, 116d) of said insulative layer.

2. The gas sensor according to claim 1, wherein said electric signal-generating conversion means comprises:

a measuring pumping means (84) including said inner and outer detecting electrodes (82, 74) arranged inside and outside said second chamber (62), for decomposing said predetermined gas component contained in said measurement gas after being subjected to said pumping process performed by said main pumping means (68), by the aid of said catalytic action and/or electrolysis, and performing a pumping process for said oxygen produced by said decomposition on the basis of a measuring pumping voltage (Vp2) applied between said inner and outer detecting electrodes (82, 74); and
a current-detecting means (88) for detecting a pumping current (Ip2) generated corresponding to an amount of said oxygen subjected to said pumping process performed by said measuring pumping means (84), wherein:

said predetermined gas component in said measurement gas is measured on the basis of said pumping current (Ip2) detected by said current-detecting means (88).

3. The gas sensor according to claim 1 or 2, wherein said electric signal-generating conversion means comprises:

a concentration-detecting means (130) including said inner and outer detecting electrodes (132, 74) arranged inside and outside said second chamber (62), for decomposing said predetermined gas component contained in said measurement gas after being subjected to said pumping process performed by said main pumping means (68), by the aid of said catalytic action, and generating an electromotive force (V2) corresponding to a difference between said amount of oxygen produced by said decomposition and an amount of oxygen contained in a gas existing on a side of said outer detecting electrode (74); and
a voltage-detecting means (134) for detecting said electromotive force (V2) generated by said concentration-detecting means (130), wherein:

said predetermined gas component in said measurement gas is measured on the basis of said electromotive force (V2) detected by said voltage-detecting means (134).

4. The gas sensor according to any one of claims 1 to 3, wherein said predetermined gas component is an oxide.

5. The gas sensor according to claim 4, wherein said oxide is a nitrogen oxide.

6. The gas sensor according to any one of claims 1 to 3, wherein said predetermined gas component is an inflammable gas, and said main pumping means (68) is operated so that the an atmosphere in said first chamber (60) is set to contain a predetermined amount of oxygen at which said inflammable gas does not burn.

7. The gas sensor according to claim 6, wherein said inflammable gas is one of hydrogen, carbon monoxide, and hydrocarbon.

8. The gas sensor according to any one of claims 1 to 7, wherein said insulative material is composed of a material having a porosity of not more than 10%.

9. The gas sensor according to any one of claims 1 to 8, wherein said inner detecting electrode (82 or 132) in said second chamber (62) is arranged and separated by a predetermined distance from a wall surface at which said lead wire (102d) is led at least to said inner detecting electrode (32 or 132).

10. The gas sensor according to any one of claims 1 to 9, further comprising an auxiliary pumping means (142) including inner and outer auxiliary pumping electrodes (144, 74) arranged inside and outside said second chamber (62), for performing a pumping process for oxygen contained in said measurement gas after being subjected to said pumping process performed by said main pumping means (68), on the basis of an auxiliary pumping voltage (Vp3) applied between said inner and outer auxiliary pumping electrodes (144, 74).

11. The gas sensor according to any one of claims 1 to 9, further comprising:

a concentration-measuring means (76) including an inner measuring electrode (72) exposed to said first chamber (60) and an outer measuring electrode (74) exposed to a reference gas-introducing space (54), for measuring an electromotive force (V1) of an oxygen concentration cell generated between said inner and outer measuring electrodes (72, 74) as a partial pressure of oxygen in said first chamber (60); and

a main pumping control means (80) for adjusting a level of said control voltage (Vp1) so that said electromotive force (V1) of said oxygen concentration cell detected by said concentration-measuring means (76) has a predetermined value, wherein:

one said insulative layer (104a) composed of said insulative material is arranged for a lead wire (102a, 102d) connected to said inner measuring electrode (72) in said first chamber (60) and/or said inner detecting electrode (82 or 132).

## Patentansprüche

1. Gassensor, umfassend:

ein Haupt-Pumpmittel (68), das eine innere und eine äußere Pumpelektrode (64, 66) umfasst, die innerhalb und außerhalb einer ersten Kammer (60) angeordnet sind, die durch Wandflächen definiert ist, die eine Oberfläche eines Substrats umfassen, das aus einem Sauerstoffion-leitenden Trockenelektrolyt besteht, auf dem die Pumpelektroden angeordnet sind, zur Durchführung eines Pumpvorgangs für Sauerstoff, das in einem Messgas enthalten ist, das von einem Außenraum in die erste Kammer (60) eingeleitet wird, auf Basis einer Steuerspannung (Vp1), die zwischen der inneren und der äußeren Pumpelektrode (64, 66) angelegt wird; und

ein ein elektrisches Signal erzeugendes Umwandlungsmittel, das eine innere und eine äußere Detektionselektrode (82 oder 132, 74) umfasst, die innerhalb und außerhalb einer zweiten Kammer (62) angeordnet sind, die von Wandflächen definiert wird, die eine Oberfläche eines Substrats umfassen, das aus einem Sauerstoffion-leitenden Trockenelektrolyt gebildet ist, auf dem die Detektionselektroden angeordnet sind, zum Abbauen einer vorbestimmten Gaskomponente, die im Messgas enthalten ist, nachdem es dem Pumpvorgang unterzogen worden ist, der vom Haupt-Pumpmittel (68) durchgeführt wird, mithilfe von Katalysewirkung und/oder Elektrolyse, um durch Umwandlung ein elektrisches Signal (Ip2 oder V2) zu erzeugen, das einer durch den Abbau erzeugten Sauerstoffmenge entspricht;

wobei der Gassensor erzeugt wird, indem isolierende Schichten und leitende Schichten auf einer Vielzahl grüner Trockenelektrolyt-Bahnen ausgebildet werden und die Vielzahl grüner Bahnen aufeinandergeschichtet und durch Brennen zu einer Einheit kombiniert werden, worin:

zumindest eine leitende Schicht, die einen Zuleitungsdraht (102d) bildet, der mit der Detektionselektrode (82, 132) in der zweiten Kammer (62) verbunden ist, durch verdichtetes isolierendes Material isoliert wird, das eine solche isolierende Schicht (104d; 112d; 114d, 116d) bildet, so dass eine Sauerstoff-Konzentration, die vom Haupt-Pumpmittel (68) in der ersten Kammer (60) gesteuert wird, in der zweiten Kammer (62) in einem vorbestimmten Bereich gehalten wird; und

die vorbestimmte Gaskomponente, die im Messgas enthalten ist, auf Basis des elektrischen Signals (Ip2 oder V2) gemessen wird, das von dem ein elektrisches Signal erzeugenden Umwandlungsmittel zugeführt wird;

worin die isolierende Schicht, die den Zuleitungsdraht (102d) isoliert, einen Abschnitt der Länge des Zuleitungsdrahts (102d) in der gebrannten Einheit unisoliert lässt, der ausgewählt ist aus:

(i) einem Abschnitt seiner Länge, der sich von der isolierenden Schicht (104d) zu einer Wandfläche der zweiten Kammer erstreckt,

(ii) einem Abschnitt seiner Länge, der sich von der isolierenden Schicht (112d) zu einer Position erstreckt, an der der Zuleitungsdraht (102d) zur Außenseite des Gassensors geführt wird, und

(iii) zumindest einem Abschnitt davon in der gebrannten Einheit an einem Zwischenraum zwischen beabstandeten Abschnitten (114d, 116d) der isolierenden Schicht.

2. Gassensor nach Anspruch 1, worin das ein elektrisches Signal erzeugende Umwandlungsmittel umfasst:

ein Messpumpmittel (84), das die innere und die äußere Detektionselektrode (82, 74) umfasst, die innerhalb und außerhalb der zweiten Kammer (62) angeordnet sind, um die vorbestimmte Gaskomponente abzubauen, die im Messgas enthalten ist, nachdem es dem vom Haupt-Pumpmittel (68) durchgeführten Pumpvorgang unterzogen worden ist, mithilfe der Katalysewirkung und/oder Elektrolyse, und das Durchführen eines Pumpvorgangs für den durch den Abbau erzeugten Sauerstoff auf Basis einer Messpumpspannung (Vp2), die zwischen der inneren und der äußeren Detektionselektrode (82, 74) angelegt wird; und

ein Stromdetektionsmittel (88) zum Detektieren eines Pumpstroms (Ip2), der entsprechend einer Menge des Sauerstoffs erzeugt wird, der dem vom Messpumpmittel (84) durchgeführten Pumpvorgang unterzogen wird, worin:

die vorbestimmte Gaskomponente im Messgas auf Basis des vom Stromdetektionsmittel (88) detektierten Pumpstroms (Ip2) gemessen wird.

3.  Gasssensor nach Anspruch 1 oder 2, worin das ein elektrisches Signal erzeugende Umwandlungsmittel umfasst:

ein Konzentrationsdetektionsmittel (130), das die innere und die äußere Detektionselektrode (132, 74) umfasst, die innerhalb und außerhalb der zweiten Kammer (62) angeordnet sind, um die vorbestimmte Gaskomponente abzubauen, die im Messgas enthalten ist, nachdem es dem vom Haupt-Pumpmittel (68) durchgeführten Pumpvorgang unterzogen worden ist, mithilfe der Katalysewirkung, und eine elektromotorische Kraft (V2) zu erzeugen, die einer Differenz zwischen der durch den Abbau erzeugten Sauerstoffmenge und einer Sauerstoffmenge entspricht, die in einem Gas enthalten ist, das auf einer Seite der äußeren Detektionselektrode (74) vorliegt; und

ein Spannungsdetektionsmittel (134) zum Detektieren der elektromotorischen Kraft (V2), die vom Konzentrationdetektionsmittel (130) erzeugt wird, worin:

die vorbestimmte Gaskomponente im Messgas auf Basis der elektromotorischen Kraft (V2) gemessen wird, die vom Spannungsdetektionsmittel (134) detektiert wird.

4.  Gassensor nach einem der Ansprüche 1 bis 3, worin die vorbestimmte Gaskomponente ein Oxid ist.

5.  Gassensor nach Anspruch 4, worin das Oxid ein Stickstoffoxid ist.

6.  Gassensor nach einem der Ansprüche 1 bis 3, worin die vorbestimmte Gaskomponente ein entflammbares Gas ist und das Haupt-Pumpmittel (68) so betätigt wird, dass die Atmosphäre in der ersten Kammer (60) so eingestellt wird, dass sie eine vorbestimmte Sauerstoffmenge enthält, bei der das entflammbare Gas nicht brennt.

7.  Gassensor nach Anspruch 6, worin das entflammbare Gas eines aus Wasserstoff, Kohlenmonoxid und Kohlenwasserstoff ist.

8.  Gassensor nach einem der Ansprüche 1 bis 7, worin das isolierende Material aus einem Material mit einer Porosität nicht über 10 % besteht.

9.  Gassensor nach einem der Ansprüche 1 bis 8, worin die innere Detektionselektrode (82 oder 132) in der zweiten Kammer (62) in einem vorbestimmten Abtand von einer Wandfläche angeordnet ist, bei dem der Zuleitungsdraht (102d) zumindest zur inneren Detektionselektrode (32 oder 132) geführt ist, und durch diesen getrennt ist.

10. Gassensor nach einem der Ansprüche 1 bis 9, weiters umfassend ein Hilfs-Pumpmittel (142), das eine innere und eine äußere Hilfs-Pumpelektrode (144, 74) umfasst, die innerhalb und außerhalb der zweiten Kammer (62) angeordnet sind, um einen Pumpvorgang für Sauerstoff, das im Messgas enthalten ist, nachdem es dem vom Haupt-Pumpmittel (68) durchgeführten Pumpvorgang unterzogen wurde, auf Basis einer Hilfs-Pumpspannung (Vp3), die zwischen der inneren und der äußeren Hilfs-Pumpelektrode (144, 74) angelegt wird, durchzuführen.

11. Gassensor nach einem der Ansprüche 1 bis 9, weiters umfassend:

ein Konzentrationsmessmittel (76), das eine innere Messelektrode (72), die gegenüber der ersten Kammer (60) frei liegt, und eine äußere Messelektrode (74) umfasst, die gegenüber einem Bezugsgas-Einleiteraum (54) frei liegt, um eine elektromotorische Kraft (V1) einer Sauerstoffkonzentrationszelle, die zwischen der inneren und der äußeren Messelektrode (72, 74) erzeugt wird, als SauerstoffPartialdruck in der ersten Kammer (60) zu messen; und

ein Haupt-Pumpsteuerungsmittel (80), um eine Höhe der Steuerungsspannung (Vp1) so einzustellen, dass die vom Konzentrationsmessmittel (76) detektierte elektromotorische Kraft (V1) der Sauerstoff-Konzentrationszelle einen vorbestimmten Wert hat, worin:

eine solche isolierende Schicht (104a), die aus dem isolierenden Material besteht, für einen Zuleitungsdraht (102a, 102d) angeordnet ist, der mit der inneren Messelektrode (72) in der ersten Kammer (60) und/ oder der inneren Detektionselektrode (82 oder 132) verbunden ist.

**Revendications**

1. Capteur de gaz comportant :

des moyens de pompage principal (68) comprenant des électrodes de pompage interne et externe (64, 66) disposées à l'intérieur et à l'extérieur d'une première chambre (60) définie par des surfaces de paroi comprenant une surface de substrat composée d'un électrolyte solide conducteur d'ion oxygène sur laquelle lesdites électrodes de pompage sont disposées, afin de réaliser un processus de pompage pour de l'oxygène contenu dans un gaz de mesure introduit dans ladite première chambre (60) depuis un espace externe, sur la base d'une tension de commande (Vp1) appliquée entre lesdites électrodes de pompage interne et externe (64, 66); et

des moyens de conversion de génération de signal électrique comprenant des électrodes de détection interne et externe (82 ou 132, 74) disposées à l'intérieur et à l'extérieur d'une deuxième chambre (62) définie par des surfaces de paroi comprenant une surface d'un substrat composé d'un électrolyte solide conducteur d'ion oxygène sur laquelle lesdites électrodes de détection sont disposées, afin de décomposer un composant de gaz prédéterminé contenu dans ledit gaz de mesure après avoir été soumis au dit processus de pompage réalisé par lesdits moyens de pompage principal (68), à l'aide d'une action catalytique et/ou une électrolyse de façon à procurer, par conversion, un signal électrique (Ip2 ou V2) correspondant à une quantité d'oxygène produit par ladite décomposition;

ledit capteur de gaz étant produit en formant des couches isolantes et des couches conductrices sur une multiplicité de feuilles crues d'électrolyte solide, et en empilant et en combinant ladite multiplicité de feuilles crues dans une unité par cuisson, dans lequel :

au moins une dite couche conductrice qui constitue un fil (102d) relié à ladite électrode de détection (82, 132) dans ladite deuxième chambre (62) est isolée par une matière isolante densifiée qui constitue une dite couche isolante densifiée (104d; 112d; 114D, 116D), de telle sorte qu'une concentration en oxygène commandée par lesdits moyens de pompage principal (68) dans ladite première chambre (60) est maintenue dans une plage prédéterminée dans ladite deuxième chambre (62); et ledit composant de gaz prédéterminé contenu dans ledit gaz de mesure est mesuré sur la base dudit signal électrique (Ip2 ou V2) délivré par lesdits moyens de conversion de génération de signal électrique; ladite couche isolante qui isole ledit fil (102d) laissant non isolée une partie de la longueur dudit fil (102d) dans ladite unité cuite, choisie parmi

(i) une partie de la longueur s'étendant depuis ladite couche isolante (104d) jusqu'à une surface de paroi de ladite deuxième chambre,

(ii) une partie de la longueur s'étendant depuis ladite couche isolante (112d) jusqu'à un emplacement dans lequel ledit fil (102d) est conduit vers l'extérieur du capteur de gaz, et

(iii) au moins une partie dans ladite unité cuite au niveau d'un espace entre des parties espacées (114d, 116d) de ladite couche isolante.

2. Capteur de gaz selon la revendication 1, dans lequel lesdits moyens de conversion de génération de signal électrique comportent :

des moyens de pompage de mesure (84) comprenant lesdites électrodes de détection interne et externe (82, 74) disposées à l'intérieur et à l'extérieur de ladite deuxième chambre (62), afin de décomposer ledit composant de gaz prédéterminé contenu dans ledit gaz de mesure après avoir été soumis au dit processus de pompage réalisé par lesdits moyens de pompage principal (68), à l'aide de ladite action catalytique et/ou de l'électrolyse, et en réalisant un processus de pompage pour ledit oxygène produit par ladite décomposition sur la base d'une tension de pompage de mesure (Vp2) appliquée entre lesdites électrodes de détection interne et externe (82, 74); et des moyens de détection de courant (88) destinés à détecter un courant de pompage (Ip2) généré en correspondance avec une quantité dudit oxygène soumise au dit processus de pompage réalisé par lesdits moyens de pompage de mesure (84), dans lequel :

ledit composant de gaz prédéterminé dans ledit gaz de mesure est mesuré sur la base dudit courant de pompage (Ip2) détecté par lesdits moyens de détection de courant (88).

3. Capteur de gaz selon la revendication 1 ou 2, dans lequel lesdits moyens de conversion de génération de signal électrique comportent :

des moyens de détection de concentration (130) comprenant lesdites électrodes de détection interne et externe (132, 74) disposées à l'intérieur et à l'extérieur de ladite deuxième chambre (62), afin de décomposer ledit composant de gaz prédéterminé contenu dans ledit gaz de mesure après avoir été soumis au dit processus de pompage réalisé par lesdits moyens de pompage principal (68), à l'aide de ladite action catalytique, et générer une force électromotrice (V2) correspondant à une différence entre ladite quantité d'oxygène produite par ladite décomposition et une quantité d'oxygène contenu dans un gaz existant sur un côté de ladite électrode de détection externe (74); et des moyens de détection de tension (134) destinés à détecter ladite force électromotrice (V2) générée par lesdits moyens de détection de concentration (130), dans lequel :

ledit composant de gaz prédéterminé dans ledit gaz de mesure est mesuré sur la base de ladite force électromotrice (V2) détectée par lesdits moyens de détection de tension (134).

4. Capteur de gaz selon l'une quelconque des revendications 1 à 3, dans lequel ledit composant de gaz prédéterminé est un oxyde.

5. Capteur de gaz selon la revendication 4, dans lequel ledit oxyde est un oxyde d'azote.

6. Capteur de gaz selon l'une quelconque des revendications 1 à 3, dans lequel ledit composant de gaz prédéterminé est un gaz inflammable, et lesdits moyens de pompage principal (68) sont mis en oeuvre de telle sorte que l'atmosphère dans ladite première chambre (60) est prévue pour contenir une quantité prédéterminée d'oxygène pour laquelle ledit gaz inflammable ne brûle pas.

7. Capteur de gaz selon la revendication 6, dans lequel ledit gaz inflammable est de l'hydrogène, du monoxyde de carbone ou un hydrocarbure.

8. Capteur de gaz selon l'une quelconque des revendications 1 à 7, dans lequel ladite matière isolante se compose d'une matière ayant une porosité qui n'est pas supérieure à 10 %.

9. Capteur de gaz selon l'une quelconque des revendications 1 à 8, dans lequel ladite électrode de détection interne (82 ou 132) dans ladite deuxième chambre (62) est disposée et séparée d'une distance prédéterminée d'une surface de paroi où ledit fil (102d) est conduit au moins vers ladite électrode de détection interne (32 ou 132).

10. Capteur de gaz selon l'une quelconque des revendications 1 à 9, comportant en outre des moyens de pompage auxiliaire (142) comprenant des électrodes de pompage auxiliaire interne et externe (144, 74) disposées à l'intérieur et à l'extérieur de ladite deuxième chambre (62), afin de réaliser un processus de pompage pour l'oxygène contenu dans ledit gaz de mesure après avoir été soumis audit processus de pompage réalisé par lesdits moyens de pompage principal (68), sur la base d'une tension de pompage auxiliaire (Vp3) appliquée entre lesdites électrodes de pompage auxiliaire interne et externe (144, 74).

11. Capteur de gaz selon l'une quelconque des revendications 1 à 9, comportant en outre :

des moyens de mesure de concentration (76) comprenant une électrode de mesure interne (72) exposée à ladite première chambre (60) et une électrode de mesure externe (74) exposée à un espace d'introduction de gaz de référence (54), afin de mesurer une force électromotrice (V1) d'une cellule de concentration en oxygène générée entre lesdites électrodes de mesure interne et externe (72, 74) sous forme d'une pression partielle d'oxygène dans ladite première chambre (60); et des moyens de commande de pompage principal (80) destinés à ajuster un niveau de ladite tension de commande (Vp1) de telle sorte que ladite force électromotrice (V1) de ladite cellule de concentration en oxygène détectée par lesdits moyens de mesure de concentration (76) a une valeur prédéterminée; dans lequel une dite couche isolante (104) composée de ladite matière isolante est prévue pour un fil (102a, 102d) relié à ladite électrode de mesure interne (72) dans ladite première chambre (60) et/ou ladite électrode de détection interne (82 ou 132).

EP 0 798 556 B1

FIG. 1

17

F I G. 2

EP 0 798 556 B1

FIG. 3

# F I G.4

# F I G.5

$1/R = 2.0 \times 10^{-4}$

S/L (mm) — vertical axis, values 0, 0001, 0002, 0003, 0004, 0005

POROSITY (-) — horizontal axis, values 0, 0.05, 0.1, 0.15, 0.2

# FIG.6

EP 0 798 556 B1

F I G. 7

FIG. 8

# FIG.9

# F I G.10

FIG.11